# EUROPEAN PATENT APPLICATION

(11) **EP 3 092 906 A1**
(43) Date of publication of application: **16.11.2016**
(21) Application number: 16175450.2
(22) Date of filing: 03.01.2013
(51) Int. Cl.: A23L 2/52, A23L 33/175, A23L 33/18, A23L 2/66

(54) **COMPOSITIONS AND METHODS FOR THE STABILITY OF REACTIVE AMINO ACIDS IN A LIQUID FOOD PRODUCT**

(30) Priority: 03.01.2012 US 201261582612 P; 27.09.2012 US 201261706252 P
(62) Divisional of application: 13703880.8
(71) Applicant: Nestec S.A., 1800 Vevey (CH)
(72) Inventor: MATEUS, Marie-Louise, 1052 Le Mont-sur-Lausanne (CH); HAILE, Tesfalidet, 1034 Boussens Vaud (CH); FOURRE, Pierre, 1400 Yverdon (CH)
(74) Representative: Rupp, Christian

(57) **Abstract**

The present disclosure provides products and methods that provide for the stability of reactive amino acids, such as carnosine and beta-alanine in liquid food products. The products and methods of the present disclosure provide several advantages including, for example, the reduction or avoidance of degradation and browning of the products during processing and storage.

## Description

### BACKGROUND

The present disclosure relates generally to health and nutrition. More specifically, the present disclosure relates to nutritional compositions or products having stabilized functional amino acids in food matrices and methods of making same. Methods for improving the stability of amino acids in food matrices are also provided.

There are many types of nutritional compositions currently on the market. Nutritional compositions can be targeted toward certain populations or consumer groups, for example, young, elderly, athletic, etc., based on the specific foods and/or other ingredients in the nutritional composition. It is important to provide proper nutrition to athletes who participate in vigorous, high-intensity exercise and train more than twenty-four hours per month. One manner in which to achieve this is to provide compositions having certain functional amino acids that metabolize in the body to aid in buffering muscle acid. Indeed, providing products having certain amino acids will help individuals work out longer and harder and at high intensity by buffering acid build up in muscles, and delaying muscle burn and fatigue.

However, the presence of amino acids in food products can be problematic for several reasons. For example, ingestion of certain amino acids can lead to mild paresthesia side-effects such as, for example, tingling, flushing, pins and needles and redness in the nose and extremities. Additionally, amino acids generally react with reducing sugars to generate compounds that cause browning and potentially loss of the active compound.

One goal of nutritional support, therefore, is to provide athletes appropriate nutritional compositions that meet their nutritional requirements for high-intensity work outs without causing negative side-effects or loss of active compounds.

### SUMMARY

Nutritional compositions or products are provided. Methods of making the nutritional compositions or products are also provided. Methods for improving the stability of a functional/reactive amino acid in a food matrix are also provided. In an embodiment, a solid food product is provided and includes a source of beta-glucans, and a reactive amino acid in a binder that is substantially free from any reducing sugars.

In another embodiment, methods for improving the stability of a reactive amino acid in a solid food product are provided. The methods include providing a source of beta-glucans, other solid ingredients including rice crisps, rolled oats, fruit pieces, providing a reactive amino acid in a binder that is substantially free from any reducing sugars, and mixing the source of beta-glucans and the reactive amino acid in the binder to make a solid food product having an improved stability of the reactive amino acid.

In another embodiment, methods for improving the stability of a reactive amino acid in a solid food product are provided. The methods include providing a source of beta-glucans, including beta-glucan crisps, providing a reactive amino acid in a binder that is substantially free from any reducing sugars, and mixing the source of beta-glucans and the reactive amino acid in the binder to make a solid food product having an improved stability of the reactive amino acid.

In another embodiment, methods for improving the stability of a reactive amino acid in a solid food product are provided. The methods include providing a source of beta-glucans, including beta-glucan crisps, other solid ingredients including rice crisps, rolled oats, fruit pieces, providing a reactive amino acid in a binder that is substantially free from any reducing sugars, and mixing the source of beta-glucans and the reactive amino acid in the binder to make a solid food product having an improved stability of the reactive amino acid.

In an embodiment, the reactive amino acid is selected from the group consisting of alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof. In an embodiment, the reactive amino acid is beta-alanine.

In another embodiment, methods for making a solid food product having improved stability of a reactive amino acid are provided. The methods further includes other solid ingredients such as rice crisps, rolled oats, fruit pieces, or a combination thereof.

In an embodiment, the solid food product has good stability of the reactive amino acid after about 12 months.

In an embodiment, the source of beta-glucans is selected from the group consisting of oats, oat bran, barley, barley bran, rye, wheat, grains, crisps, or combinations thereof. In an embodiment, the source of beta-glucans is oats.

In an embodiment, the solid food product is a solid food bar. A serving size of the solid food bar may be from about 30 to about 90 grams. Each serving size of the solid food bar may include from about 1.0 g to about 3.5 g of the reactive amino acid. In an embodiment, each serving size of the solid food bar has about 1.6 g of the reactive amino acid.

In an embodiment, the solid food product is a solid food bar. A serving size of the solid food bar may be from about 40 to about 60 grams. Each serving size of the solid food bar may include from about 1.4 g to about 1.75 g of the reactive amino acid. In an embodiment, each serving size of the solid food bar has about 1.6 g of the reactive amino acid.

In an embodiment, the reactive amino acid is in crystal form. Alternatively, the reactive amino acid may be in powder form.

In an embodiment, the binder consists essentially of a maltitol syrup. Alternatively, the binder consists essentially of a sucrose syrup. The binder may also consists essentially of a maltitol and sucrose syrup blend.

In still yet another embodiment, solid food products are provided and include a source of beta-glucans and a composition having a reactive amino acid in a binder consisting essentially of one of a maltitol syrup, a sucrose syrup, and a maltitol and sucrose syrup blend.

In another embodiment, methods for improving the stability of a reactive amino acid in a solid food product are provided. The methods include providing a source of beta-glucans, providing a composition including a reactive amino acid in a binder consisting essentially of one of a maltitol syrup, a sucrose syrup, and a maltitol and sucrose syrup blend, and mixing the source of beta-glucans and the composition including the reactive amino acid in a binder to make a solid food product having an improved stability of the reactive amino acid.

In yet another embodiment, methods for making a solid food product having improved stability of a reactive amino acid are provided. The methods include combining a reactive amino acid with a binder consisting essentially of one of a maltitol syrup, a sucrose syrup, and a maltitol and sucrose syrup blend to form a binder composition, and mixing the binder composition with a source of beta-glucans to make a solid food product having an improved stability of the reactive amino acid.

In an embodiment, the reactive amino acid is selected from the group consisting of alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof. In an embodiment, the reactive amino acid is beta-alanine.

In an embodiment, the solid food product has good stability of the reactive amino acid after about 12 months.

In an embodiment, the source of beta-glucans is selected from the group consisting of oats, oat bran, barley, barley bran, rye, wheat, grains, crisps, fruit pieces, or combinations thereof. In an embodiment, the source of beta-glucans is oats.

In an embodiment, the solid food product is a solid food bar. A serving size of the solid food bar may be from about 30 to about 90 grams. Each serving size of the solid food bar may have from about 1.0 g to about 3.5 g of the reactive amino acid. In an embodiment, each serving size of the solid food bar has about 1.6 g of the reactive amino acid.

In an embodiment, the solid food product is a solid food bar. A serving size of the solid food bar may be from about 40 to about 60 grams. Each serving size of the solid food bar may have from about 1.4 g to about 1.75 g of the reactive amino acid. In an embodiment, each serving size of the solid food bar has about 1.6 g of the reactive amino acid.

In an embodiment, the reactive amino acid is in crystal form. Alternatively, the reactive amino acid may be in powder form.

In an embodiment, the binder consists essentially of a maltitol syrup. Alternatively, the binder consists essentially of a sucrose syrup. The binder may also consist essentially of a maltitol and sucrose syrup blend.

In still yet another embodiment, solid food products are provided. The solid food products include a source of protein that is low in reducing sugars, and a reactive amino acid in a binder that is substantially free from any reducing sugars.

In another embodiment, methods for improving the stability of a reactive amino acid in a solid food product are provided. The methods include providing a source of protein that is low in reducing sugars, providing a reactive amino acid in a binder that is substantially free from any reducing sugars, and mixing the source of protein and the reactive amino acid in the binder to make a solid food product having an improved stability of the reactive amino acid.

In yet another embodiment, methods for making a solid food product having improved stability of a reactive amino acid are provided. The methods include combining a reactive amino acid with a binder that is substantially free from any reducing sugars to form a binder composition, and mixing the binder composition with a source of protein that is low in reducing sugars to make a solid food product having an improved stability of the reactive amino acid.

In an embodiment, the reactive amino acid is selected from the group consisting of alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof. In an embodiment, the reactive amino acid is beta-alanine.

In an embodiment, the solid food product has good stability of the reactive amino acid after about 6 months.

In an embodiment, the source of protein is a source selected from the group consisting of animal-based, plant-based, dairy-based, artificial, or combinations thereof. The protein may be calcium caseinate, or whey protein, or a soy protein isolate, or a milk protein. In an embodiment, the source of protein has less than about 0.2% lactose.

In an embodiment, the source of protein is in a powder form.

In an embodiment, the solid food product is a solid food bar. A serving size of the solid food bar may be from about 30 to about 90 grams. Each serving size of the solid food bar may have from about 1.0 g to about 3.5 g of the reactive amino acid. In an embodiment, each serving size of the solid food bar has about 1.6 g of the reactive amino acid.

In an embodiment, the solid food product is a solid food bar. A serving size of the solid food bar may be from about 40 to about 60 grams. Each serving size of the solid food bar may have from about 1.4 g to about 1.75 g of the reactive amino acid. In an embodiment, each serving size of the solid food bar has about 1.6 g of the reactive amino acid.

In an embodiment, the reactive amino acid is in crystal form. Alternatively, the reactive amino acid may be in powder form.

In an embodiment, the binder consists essentially of a maltitol syrup. Alternatively, the binder consists essentially of a sucrose syrup. The binder may also consist essentially of a maltitol and sucrose syrup blend.

In yet another embodiment, solid food products are provided and include a source of protein that is low in reducing sugars, and a reactive amino acid in a binder.

In yet another embodiment, solid food products are provided and include a source of protein that is low in reducing sugars, and a reactive amino acid in a binder consisting essentially of one of a maltitol syrup, a sucrose syrup, and a maltitol and sucrose syrup blend.

In still yet another embodiment, methods for improving the stability of a reactive amino acid in a solid food product are provided. The methods include providing a source of protein that is low in reducing sugars, providing a reactive amino acid in a binder consisting essentially of one of a maltitol syrup, a sucrose syrup, and a maltitol and sucrose syrup blend, and mixing the source of protein and the reactive amino acid in the binder to make a solid food product having an improved stability of the reactive amino acid.

In yet another embodiment, methods for making a solid food product having improved stability of a reactive amino acid are provided. The methods include combining a reactive amino acid with a binder consisting essentially of one of a maltitol syrup, a sucrose syrup, and a maltitol and sucrose syrup blend to form a binder composition, and mixing the binder composition with a source of protein that is low in reducing sugars to make a solid food product having an improved stability of the reactive amino acid.

In an embodiment, the reactive amino acid is selected from the group consisting of alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof. In an embodiment, the reactive amino acid is beta-alanine.

In an embodiment, the solid food product has good stability of the reactive amino acid after about 6 months.

In an embodiment, the source of protein is a source selected from the group consisting of animal-based, plant-based, dairy-based, artificial, or combinations thereof. The protein may be calcium caseinate, or whey protein, or a soy protein isolate, or a milk protein.

In an embodiment, the source of protein has less than about 0.2% lactose.

In an embodiment, the source of protein is in a powder form.

In an embodiment, the solid food product is a solid food bar. A serving size of the solid food bar may be from about 30 to about 90 grams. Each serving size of the solid food bar may have from about 1.0 g to about 3.5 g of the reactive amino acid. In an embodiment, each serving size of the solid food bar has about 1.6 g of the reactive amino acid.

In an embodiment, the solid food product is a solid food bar. A serving size of the solid food bar may be from about 40 to about 60 grams. Each serving size of the solid food bar may have from about 1.4 g to about 1.75 g of the reactive amino acid. In an embodiment, each serving size of the solid food bar includes about 1.6 g of the reactive amino acid.

In an embodiment, the reactive amino acid is in crystal form. Alternatively, the reactive amino acid may be in powder form.

In an embodiment, the binder consists essentially of a maltitol syrup. Alternatively, the binder consists essentially of a sucrose syrup. The binder may also consist essentially of a maltitol and sucrose syrup blend.

In another embodiment, liquid food products are provded and include a reactive amino acid in an amount from about 1.0 g to about 3.5 g per about 200 to about 500 ml of a liquid, wherein the liquid food product has a pH from about 3 to about 5.

In another embodiment, liquid food products are provded and include a reactive amino acid in an amount from about 1.4 g to about 1.75 g per about 300 to about 500 ml of a liquid, wherein the liquid food product has a pH from about 3 to about 5.

In yet another embodiment, methods for improving the stability of a reactive amino acid in a liquid food product are provided. The methods include dissolving from about 1.4 g to about 1.75 g of a reactive amino acid per about 300 to about 500 ml of a liquid to make a liquid food product having an improved stability of the reactive amino acid, wherein the liquid food product has a pH from about 3 to about 5.

In another embodiment, liquid food products are provded and include a reactive amino acid in an amount from about 1.0 g to about 3.5 g per about 200 to about 500 ml of a liquid, wherein the liquid food product has a pH from about 3 to about 5.

In still yet another embodiment, methods for making a liquid food product having improved stability of a reactive amino acid are provided. The methods include dissolving from about 1.4 g to about 1.75 g of a reactive amino acid per about 300 to about 500 ml of a liquid to make a liquid food product having an improved stability of the reactive amino acid, wherein the liquid food product has a pH from about 3 to about 5.

In still yet another embodiment, methods for making a liquid food product having improved stability of a reactive amino acid are provided. The methods include dissolving from about 1.0 g to about 3.5 g of a reactive amino acid per about 200 to about 500 ml of a liquid to make a liquid food product having an improved stability of the reactive amino acid, wherein the liquid food product has a pH from about 3 to about 5.

In an embodiment, the reactive amino acid is selected from the group consisting of alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof. In an embodiment, the reactive amino acid is beta-alanine.

In an embodiment, the liquid food product has good stability of the reactive amino acid after heating of the liquid food product at a temperature from about 70°C to about 90°C for an amount of time from about 45 minutes to about 75 minutes. In an embodiment, the liquid food product has good stability of the reactive amino acid after heating of the liquid food product at a temperature from about 80°C for an amount of time of about 60 minutes.

In an embodiment, the reactive amino acid is present in an amount of about 1.6 g.

In an embodiment, the reactive amino acid is provided per 400 ml of the liquid.

In an embodiment, the pH of the liquid food product is about 4.

In an embodiment, the liquid food product is a ready-to-drink composition.

In yet another embodiment, liquid food products are provided and include a reactive amino acid in an amount from about 5 g to about 6.5 g per about 100 to about 300 ml of a liquid, wherein the liquid food product has a pH from about 3 to about 5.

In still yet another embodiment, methods for improving the stability of a reactive amino acid in a liquid food product are provided. The methods include dissolving from about 5 g to about 6.5 g of a reactive amino acid per about 100 to about 300 ml of a liquid to make a liquid food product having an improved stability of the reactive amino acid, wherein the liquid food product has a pH from about 3 to about 5.

In another embodiment, methods for making a liquid food product having improved stability of a reactive amino acid are provided. The methods include dissolving from about 5 g to about 6.5 g of a reactive amino acid per about 100 to about 300 ml of a liquid to make a liquid food product having an improved stability of the reactive amino acid, wherein the liquid food product has a pH from about 3 to about 5.

In an embodiment, the reactive amino acid is selected from the group consisting of alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof. In an embodiment, the reactive amino acid is carnosine.

In an embodiment, the reactive amino acid is present in an amount of about 5.7 g.

In an embodiment, the reactive amino acid is provided per about 200 ml of the liquid.

In an embodiment, the pH of the liquid food product is about 4.

In an embodiment, the liquid food product is a ready-to-drink composition.

An advantage of the present disclosure is to provide improved nutritional products and compositions.

Another advantage of the present disclosure is to provide food products having improved stability of amino acids.

Yet another advantage of the present disclosure is to provide food products having amino acids without causing paresthesia side-effects.

Still yet another advantage of the present disclosure is to provide food products having amino acids that are less susceptible to Maillard reactions.

Another advantage of the present disclosure is to provide functional amino acids stabilized in food matrices.

Yet another advantage is to provide products capable of delivering muscle buffering functional amino acids to athletes.

Additional features and advantages are described herein, and will be apparent from the following Detailed Description and the figures.

### BRIEF DESCRIPTION OF THE FIGURES

FIG. 1 illustrates three food products containing 1.6 g beta-alanine per serving size after three months storage at 4°C, 20°C, and 30°C, respectively.
FIG. 2 illustrates an average beta-alanine percent recovery in the food products of FIG. 1 for various shelf-life conditions.
FIG. 3 illustrates a food product having decreased amounts of reducing sugars.
FIG. 4 illustrates beta-alanine concentration in a food product with decreased reducing sugars during storage at 20°C and 30°C.
FIG. 5 illustrates food products containing 1.6 g beta-alanine and each containing a different source of beta-glucans.
FIG. 6 illustrates food products containing 1.6 g beta-alanine and each containing a different source of beta-glucans.
FIG. 7 illustrates different food products including beta-alanine and maltitol or sucrose syrup binders after storage for one month at various temperatures.
FIG. 8 illustrates different food products including beta-alanine, maltitol or sucrose syrup binders, and low lactose protein ingredients after storage for six months at various temperatures.
FIG. 9 illustrates average beta-alanine percent recovery in protein bars containing maltitol or sucrose syrup binders and low lactose protein ingredients after storage for six months at various temperatures.
FIG. 10 illustrates beta-alanine recovery in beverages after heating for one hour at about 80°C.

### DETAILED DESCRIPTION

As used herein, the singular forms "a," "an" and "the" include plural referents unless the context clearly dictates otherwise. Thus, for example, reference to "a polypeptide" includes a mixture of two or more polypeptides and the like.

As used herein, "about" is understood to refer to numbers in a range of numerals. Moreover, all numerical ranges herein should be understood to include all integer, whole or fractions, within the range.

As used herein, the phrase "amino acid" is understood to include one or more amino acids. The amino acid can be, for example, alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof.

As used herein, the term "antioxidant" is understood to include any one or more of various substances such as beta-carotene (a vitamin A precursor), vitamin C, vitamin E, and selenium that inhibit oxidation or reactions promoted by Reactive Oxygen Species ("ROS") and other radical and non-radical species. Additionally, antioxidants are molecules capable of slowing or preventing the oxidation of other molecules. Non-limiting examples of antioxidants include carotenoids, coenzyme Q10 ("CoQ10"), flavonoids, glutathione, Goji (wolfberry), hesperidin, lactowolfberry, lignan, lutein, lycopene, polyphenols, selenium, vitamin A, vitamin B₁, vitamin B₆, vitamin B₁₂, vitamin C, vitamin D, vitamin E, zeaxanthin, or combinations thereof.

As used herein, "carbohydrate(s)" are meant to include Monosaccharides include Trioses (such as: Ketotriose (Dihydroxyacetone); Aldotriose (Glyceraldehyde)); Tetroses which include: Ketotetrose (such as: Erythrulose) and Aldotetroses (such as:Erythrose, Threose); Pentoses which include: Ketopentose (such as:Ribulose, Xylulose) Aldopentose (such as:Ribose, Arabinose, Xylose, Lyxose), Deoxy sugar (such as: Deoxyribose); Hexoses which include: Ketohexose (such as:Psicose, Fructose, Sorbose, Tagatose), Aldohexose (such as: Allose, Altrose, Glucose, Mannose, Gulose, Idose, Galactose, Talose), Deoxy sugar (such as: Fucose, Fuculose, Rhamnose); Heptose (such as: Sedoheptulose); Octose; Nonose (such as: Neuraminic acid); Disaccharides which include: Sucrose; Lactose; Maltose; Trehalose; Turanose; Cellobiose; kojiboise; nigerose; isomaltose; and palatinose; Trisaccharides which include: Melezitose; and Maltotriose; Oligosaccharides that include: corn syrups and maltodextrin; and Polysaccharides that include: glucan (such as dextrin, dextran, beta-glucan), glycogen, mannan, galactan, and starch (such as those from corn, wheat, tapioca, rice, and potato, including Amylose and Amylopectin. The starches can be natural or modified or gelatinized); or combinations thereof. Carbohydrates also include source of sweeteners such as honey, maple syrup, glucose (dextrose), corn syrup, corn syrup solids, high fructose corn syrups, crystalline fructose, juice concentrates, and crystalline juice.

As used herein, "food grade micro-organisms" means micro-organisms that are used and generally regarded as safe for use in food.

While the terms "individual" and "patient" are often used herein to refer to a human, the invention is not so limited. Accordingly, the terms "individual" and "patient" refer to any animal, mammal or human having or at risk for a medical condition that can benefit from the treatment.

As used herein, non-limiting examples of sources of ω-3 fatty acids such α-linolenic acid ("ALA"), docosahexaenoic acid ("DHA") and eicosapentaenoic acid ("EPA") include fish oil, krill, poultry, eggs, or other plant or nut sources such as flax seed, walnuts, almonds, algae, modified plants, etc.

The term "microorganism" is meant to include the bacterium, yeast and/or fungi, a cell growth medium with the microorganism, or a cell growth medium in which microorganism was cultivated.

As used herein, the term "minerals" is understood to include boron, calcium, chromium, copper, iodine, iron, magnesium, manganese, molybdenum, nickel, phosphorus, potassium, selenium, silicon, tin, vanadium, zinc, or combinations thereof.

As used herein, a "non-replicating" microorganism means that no viable cells and/or colony forming units can be detected by classical plating methods. Such classical plating methods are summarized in the microbiology book: James Monroe Jay, et al., "Modem food microbiology," 7th edition, Springer Science, New York, N. Y. p. 790 (2005). Typically, the absence of viable cells can be shown as follows: no visible colony on agar plates or no increasing turbidity in liquid growth medium after inoculation with different concentrations of bacterial preparations ('non replicating' samples) and incubation under appropriate conditions (aerobic and/or anaerobic atmosphere for at least 24h). For example, bifidobacteria such as Bifidobacterium longum, Bifidobacterium lactis and Bifidobacterium breve or lactobacilli, such as Lactobacillus paracasei or Lactobacillus rhamnosus, may be rendered non-replicating by heat treatment, in particular low temperature/long time heat treatment.

As used herein, a "nucleotide" is understood to be a subunit of deoxyribonucleic acid ("DNA") or ribonucleic acid ("RNA"). It is an organic compound made up of a nitrogenous base, a phosphate molecule, and a sugar molecule (deoxyribose in DNA and ribose in RNA). Individual nucleotide monomers (single units) are linked together to form polymers, or long chains. Exogenous nucleotides are specifically provided by dietary supplementation. The exogenous nucleotide can be in a monomeric form such as, for example, 5'-Adenosine Monophosphate ("5'-AMP"), 5'-Guanosine Monophosphate ("5'-GMP"), 5'-Cytosine Monophosphate ("5'-CMP"), 5'-Uracil Monophosphate ("5'-UMP"), 5'-Inosine Monophosphate ("5'-IMP"), 5'-Thymine Monophosphate ("5'-TMP"), or combinations thereof. The exogenous nucleotide can also be in a polymeric form such as, for example, an intact RNA. There can be multiple sources of the polymeric form such as, for example, yeast RNA.

"Nutritional compositions," or "nutritional products," as used herein, are understood to include any number of wholesome food ingredients and possibly optional additional ingredients based on a functional need in the product and in full compliance with all applicable regulations. The optional ingredients may include, but are not limited to, conventional food additives, for example one or more, acidulants, additional thickeners, buffers or agents for pH adjustment, chelating agents, colorants, emulsifies, excipient, flavor agent, mineral, osmotic agents, a pharmaceutically acceptable carrier, preservatives, stabilizers, sugar, sweeteners, texturizers, and/or vitamins. The optional ingredients can be added in any suitable amount.

As used herein, "phytochemicals" or "phytonutrients" are non-nutritive compounds that are found in many foods. Phytochemicals are functional foods that have health benefits beyond basic nutrition, and are health promoting compounds that come from plant sources. "Phytochemicals" and "Phytonutrients" refers to any chemical produced by a plant that imparts one or more health benefit on the user. Non-limiting examples of phytochemicals and phytonutrients include those that are:
i) phenolic compounds which include monophenols (such as, for example, apiole, carnosol, carvacrol, dillapiole, rosemarinol); flavonoids (polyphenols) including flavonols (such as, for example, quercetin, fingerol, kaempferol, myricetin, rutin, isorhamnetin), flavanones (such as, for example, fesperidin, naringenin, silybin, eriodictyol), flavones (such as, for example, apigenin, tangeritin, luteolin), flavan-3-ols (such as, for example, catechins, (+)-catechin, (+)-gallocatechin, (-)-epicatechin, (-)-epigallocatechin, (-)-epigallocatechin gallate (EGCG), (-)-epicatechin 3-gallate, theaflavin, theaflavin-3-gallate, theaflavin-3'-gallate, theaflavin-3,3'-digallate, thearubigins), anthocyanins (flavonals) and anthocyanidins (such as, for example, pelargonidin, peonidin, cyanidin, delphinidin, malvidin, petunidin), isoflavones (phytoestrogens) (such as, for example, daidzein (formononetin), genistein (biochanin A), glycitein), dihydroflavonols, chalcones, coumestans (phytoestrogens), and Coumestrol; Phenolic acids (such as: Ellagic acid, Gallic acid, Tannic acid, Vanillin, curcumin); hydroxycinnamic acids (such as, for example, caffeic acid, chlorogenic acid, cinnamic acid, ferulic acid, coumarin); lignans (phytoestrogens), silymarin, secoisolariciresinol, pinoresinol and lariciresinol); tyrosol esters (such as, for example, tyrosol, hydroxytyrosol, oleocanthal, oleuropein); stilbenoids (such as, for example, resveratrol, pterostilbene, piceatannol) and punicalagins;
ii) terpenes (isoprenoids) which include carotenoids (tetratetpenoids) including carotenes (such as, for example, alpha-carotene, beta-carotene, gamma-carotene, δ-carotene, lycopene, neurosporene, phytofluene, phytoene), and xanthophylls (such as, for example, canthaxanthin, cryptoxanthin, aeaxanthin, astaxanthin, lutein, rubixanthin); monoterpenes (such as, for example, limonene, perillyl alcohol); saponins; lipids including: phytosterols (such as, for example, campesterol, beta sitosterol, gamma sitosterol, stigmasterol), tocopherols (vitamin E), and ω-3, -6, and -9 fatty acids (such as, for example, gamma-linolenic acid); triterpenoid (such as, for example, oleanolic acid, ursolic acid, betulinic acid, moronic acid);
iii) betalains which include Betacyanins (such as: betanin, isobetanin, probetanin, neobetanin); and betaxanthins (non glycosidic versions) (such as, for example, indicaxanthin, and vulgaxanthin);
iv) organosulfides, which include, for example, dithiolthiones (isothiocyanates) (such as, for example, sulphoraphane); and thiosulphonates (allium compounds) (such as, for example, allyl methyl trisulfide, and diallyl sulfide), indoles, glucosinolates, which include, for example, indole-3-carbinol; sulforaphane; 3,3'-diindolylmethane; sinigrin; allicin; alliin; allyl isothiocyanate; piperine; syn-propanethial-S-oxide;
v) protein inhibitors, which include, for example, protease inhibitors;
vi) other organic acids which include oxalic acid, phytic acid (inositol hexaphosphate); tartaric acid; and anacardic acid; or
vii) combinations thereof.

As used herein, a "prebiotic" is a food substance that selectively promotes the growth of beneficial bacteria or inhibits the growth or mucosal adhesion of pathogenic bacteria in the intestines. They are not inactivated in the stomach and/or upper intestine or absorbed in the gastrointestinal tract of the person ingesting them, but they are fermented by the gastrointestinal microflora and/or by probiotics. Prebiotics are, for example, defined by Glenn R. Gibson and Marcel B. Roberfroid, "Dietary Modulation of the Human Colonic Microbiota: Introducing the Concept of Prebiotics," J. Nutr. 1995 125: 1401-1412. Non-limiting examples of prebiotics include acacia gum, alpha glucan, arabinogalactans, beta glucan, dextrans, fructooligosaccharides, fucosyllactose, galactooligosaccharides, galactomannans, gentiooligosaccharides, glucooligosaccharides, guar gum, inulin, isomaltooligosaccharides, lactoneotetraose, lactosucrose, lactulose, levan, maltodextrins, milk oligosaccharides, partially hydrolyzed guar gum, pecticoligosaccharides, resistant starches, retrograded starch, sialooligosaccharides, sialyllactose, soyoligosaccharides, sugar alcohols, xylooligosaccharides, or their hydrolysates, or combinations thereof.

As used herein, probiotic micro-organisms (hereinafter "probiotics") are food-grade microorganisms (alive, including semi-viable or weakened, and/or non-replicating), metabolites, microbial cell preparations or components of microbial cells that could confer health benefits on the host when administered in adequate amounts, more specifically, that beneficially affect a host by improving its intestinal microbial balance, leading to effects on the health or well-being of the host. See, Salminen S, Ouwehand A. Benno Y. et al., "Probiotics: how should they be defined?," Trends Food Sci. Technol., 1999:10, 107-10. In general, it is believed that these micro-organisms inhibit or influence the growth and/or metabolism of pathogenic bacteria in the intestinal tract. The probiotics may also activate the immune function of the host. For this reason, there have been many different approaches to include probiotics into food products. Non-limiting examples of probiotics include *Aerococcus*, *Aspergillus*, *Bacillus*, *Bacteroides*, *Bifidobacterium, Candida*, *Clostridium*, *Debaromyces, Enterococcus*, *Fusobacterium, Lactobacillus*, *Lactococcus*, *Leuconostoc, Melissococcus*, *Micrococcus*, *Mucor, Oenococcus, Pediococcus*, *Penicillium*, *Peptostrepococcus*, *Pichia, Propionibacterium, Pseudocatenulatum*, *Rhizopus*, *Saccharomyces*, *Staphylococcus*, *Streptococcus*, *Torulopsis*, *Weissella,* or combinations thereof.

The terms "protein," "peptide," "oligopeptides" or "polypeptide," as used herein, are understood to refer to any composition that includes, a single amino acids (monomers), two or more amino acids joined together by a peptide bond (dipeptide, tripeptide, or polypeptide), collagen, precursor, homolog, analog, mimetic, salt, prodrug, metabolite, or fragment thereof or combinations thereof. For the sake of clarity, the use of any of the above terms is interchangeable unless otherwise specified. It will be appreciated that polypeptides (or peptides or proteins or oligopeptides) often contain amino acids other than the 20 amino acids commonly referred to as the 20 naturally occurring amino acids, and that many amino acids, including the terminal amino acids, may be modified in a given polypeptide, either by natural processes such as glycosylation and other post-translational modifications, or by chemical modification techniques which are well known in the art. Among the known modifications which may be present in polypeptides of the present invention include, but are not limited to, acetylation, acylation, ADP-ribosylation, amidation, covalent attachment of a flavanoid or a heme moiety, covalent attachment of a polynucleotide or polynucleotide derivative, covalent attachment of a lipid or lipid derivative, covalent attachment of phosphatidylinositol, cross-linking, cyclization, disulfide bond formation, demethylation, formation of covalent crosslinks, formation of cystine, formation of pyroglutamate, formylation, gamma-carboxylation, glycation, glycosylation, glycosylphosphatidyl inositol ("GPI") membrane anchor formation, hydroxylation, iodination, methylation, myristoylation, oxidation, proteolytic processing, phosphorylation, prenylation, racemization, selenoylation, sulfation, transfer-RNA mediated addition of amino acids to polypeptides such as arginylation, and ubiquitination. The term "protein" also includes "artificial proteins" which refers to linear or non-linear polypeptides, consisting of alternating repeats of a peptide.

Non-limiting examples of proteins include dairy based proteins, plant based proteins, animal based proteins and artificial proteins. Dairy based proteins include, for example, casein, caseinates (e.g., all forms including sodium, calcium, potassium caseinates), casein hydrolysates, whey (e.g., all forms including concentrate, isolate, demineralized), whey hydrolysates, milk protein concentrate, and milk protein isolate. Plant based proteins include, for example, soy protein (e.g., all forms including concentrate and isolate), pea protein (e.g., all forms including concentrate and isolate), canola protein (e.g., all forms including concentrate and isolate), other plant proteins that commercially are wheat and fractionated wheat proteins, corn and it fractions including zein, rice, oat, potato, peanut, green pea powder, green bean powder, and any proteins derived from beans, lentils, and pulses. Animal based proteins may be selected from the group consisting of beef, poultry, fish, lamb, seafood, or combinations thereof.

As used herein, a "synbiotic" is a supplement that contains both a prebiotic and a probiotic that work together to improve the microflora of the intestine.

As used herein the term "vitamin" is understood to include any of various fat-soluble or water-soluble organic substances (non-limiting examples include vitamin A, Vitamin B1 (thiamine), Vitamin B2 (riboflavin), Vitamin B3 (niacin or niacinamide), Vitamin B5 (pantothenic acid), Vitamin B6 (pyridoxine, pyridoxal, or pyridoxamine, or pyridoxine hydrochloride), Vitamin B7 (biotin), Vitamin B9 (folic acid), and Vitamin B12 (various cobalamins; commonly cyanocobalamin in vitamin supplements), vitamin C, vitamin D, vitamin E, vitamin K, folic acid and biotin) essential in minute amounts for normal growth and activity of the body and obtained naturally from plant and animal foods or synthetically made, pro-vitamins, derivatives, analogs.

In an embodiment, a source of vitamins or minerals can include at least two sources or forms of a particular nutrient. This represents a mixture of vitamin and mineral sources as found in a mixed diet. Also, a mixture may also be protective in case an individual has difficulty absorbing a specific form, a mixture may increase uptake through use of different transporters (e.g., zinc, selenium), or may offer a specific health benefit. As an example, there are several forms of vitamin E, with the most commonly consumed and researched being tocopherols (alpha, beta, gamma, delta) and, less commonly, tocotrienols (alpha, beta, gamma, delta), which all vary in biological activity. There is a structural difference such that the tocotrienols can more freely move around the cell membrane; several studies report various health benefits related to cholesterol levels, immune health, and reduced risk of cancer development. A mixture of tocopherols and tocotrienols would cover the range of biological activity.

Burning muscle is a complaint that resonates among athletes, particularly those who engage in vigorous, high-intensity exercises, or endurance activities. These athletes recognize that muscle burn causes them to stop activity or slow down activity much sooner than they would like. As such, high-intensity athletes would benefit from methods to delay muscle burn to allow them to work out longer and harder. In fact, in a consumer research poll taken by Applicant, the second highest scoring benefit amongst consumers participating in vigorous exercise more than twenty-four hours per month was "have more intense workout by delaying build-up of muscle lactic acid." Applicant also found that consumer appeal grows if functional ingredients that can provide such benefits are integrated into familiar and trusted formats such as, for example, energy or performance bars.

Many amino acids are used as functional ingredients in the food industry to provide various benefits to consumers. Unfortunately, the use of amino acids in food products is not without its disadvantages. For example, decomposition of such compounds generally occurs by reaction with reducing sugars during processing and shelf-life. Indeed, amino acids (e.g., beta-alanine) generally react with reducing sugars (e.g., glucose or fructose monomers, lactose) to generate compounds that cause browning. This reaction is known as a "Maillard reaction" or "non-enzymatic browning." In addition to the development of a dark color, such reactions can also result in the loss of the active compound.

The main factors influencing Maillard Reactions are known (e.g., presence of amino groups, reducing sugars, pH, water content, temperature, etc.), and several actions may be taken to help reduce browning. Such actions include the following: (i) removing reducing sugars, which can be difficult in a food matrix containing cereals (e.g., with various available carbohydrates) or milk proteins ingredients (e.g., the presence of lactose); (ii) reducing the pH, which is also difficult in a solid food matrix such as cereal or protein bars; (iii) decreasing storage temperature, which is not possible for shelf-stable products; and (iv) reducing water activity, which cannot be decreased too much without the product hardening substantially.

Additionally, although there is a strong scientific evidence to support the role of the amino-acid beta-alanine in buffering muscle acid (H+) and improving high intensity exercise, mild paresthesia side-effects are known to occur with the ingestion of certain amino acids such as beta-alanine. All of these side-effects are deemed unacceptable for food products intended to be marketed and sold to the public. Stability of amino acids, or compounds that can act as biological sources of amino acids, in food matrices would help to alleviate such adverse side-effects by attenuating the rise in the blood-plasma concentration of beta-alanine, providing a way to safely and effectively increase carnosine biosynthesis in muscle and to attenuate metabolic acidosis and muscle fatigue during anaerobic activity.

Therefore, finding a way to provide stability of functional amino acids in food matrices is a matter of compliance and could open new routes to product innovation. For example, the amino acid beta-alanine is used in sports nutrition as a lactic acid buffering agent to decrease muscle pain during exercise. Providing stabilized amino acids in a food matrix would diversify ways of intake for the consumer, and create opportunities for the food industry. More specifically, providing food products having stabilized beta-alanine would help consumers work out longer and harder and at high intensity by buffering acid built up in muscles, delaying muscle burn and fatigue, and is therefore relevant for the category.

Although the present disclosure relates to the improved stability of all amino acids in food matrices, and compositions and products having all types of amino acids in the disclosed binder compositions, the present disclosure will refer to the specific amino acid of beta-alanine. Additionally, and as will be shown below in the examples, prototypes tested by Applicant include the specific amino acid of beta-alanine.

Beta-alanine and its methylated analogues form di-peptides within the human or animal body. The di-peptides produced from beta-alanine include carnosine, anserine, or balenine, which are all involved in the regulation of intracellular pH homeostasis during muscle contraction and, therefore, are involved in the development of muscle fatigue. The di-peptides provide an effective way to accumulate pH-sensitive histidine residues in a cell. Therefore, increasing the amount of such di-peptides within a muscle advantageously affects performance and the amount of work that can be performed by the muscle.

Beta-alanine can be generated within the body or may be made available by consumption of foods containing same. During high-intensity exercise, the accumulation of hydronium ions (N₃O⁺) formed during glycolysis and the accumulation of lactate due to anaerobic metabolism can significantly reduce intracellular pH, which can compromise the function of the creatine-phosphorylcreatine system. Such a decline in intracellular pH also can affect other functions within the cells such as the function of the contractile proteins in muscle fibers. Administration of beta-alanine to an individual can increase muscle beta-alanylhistidine peptide concentration and, therefore, increase intramuscular buffering capacity.

Accordingly, providing beta-alanine or a compound that is a biological source of beta-alanine (e.g., carnosine, anserine, or balanine, and salts and chemical derivatives thereof) is one manner in which to attenuate the metabolic acidosis brought on during high-intensity exercise by delaying the onset of fatigue during anaerobic exercise. Biological sources of beta-alanine are compounds that, when administered to the body by any route (e.g., parenterally, orally, topically, etc.) are converted by one or more chemical- or enzyme-catalysed reaction steps to beta-alanine. The converted beta-alanine then appears in blood, plasma or serum and is made available for uptake into muscle and other tissues.

The present disclosure is directed to developing products that deliver muscle buffering amino acid compounds to athletes. More specifically, embodiments of the present disclosure are directed to providing food products having stabilized beta-alanine in a binder composition low in, or substantially free of, reducing sugars. The present disclosure demonstrates technical solutions to stabilize beta-alanine in a solid bar matrix and avoid degradation and browning from Maillard-type reactions during process/storage.

While the present disclosure is primarily directed to solid food matrices such as, for example, energy bars, other product compositions and formats were also investigated and found to provide stability of beta-alanine. Indeed, the present disclosure provides a solution to the problem of keeping beta-alanine stable in a cereal or protein bar matrix or in a ready-to-drink format.

To determine the stability of beta-alanine in food products, prototypes of various product formats containing beta-alanine were developed and technical solutions were provided (e.g., removal of reducing sugars and pH reduction) to ensure good to acceptable stability of the active compound. In general, Applicant found that: (i) a cereal bar (e.g., granola bar) prototype had approximately 78% recovery of beta-alanine after about 12 months storage at 20°C, and approximately 79% recovery of beta-alanine after 6 months storage at 30°C; (ii) a protein bar prototype had up to 97% beta-alanine recovery after 6 months storage at 30°C; and (iii) a ready-to-drink ("RTD") composition had no beta-alanine loss observed for a drink with 1.6 g beta-alanine/200 ml after prolonged heating (80°C for 1 hour).

In a first embodiment, cereal granola bar prototypes were prepared and included beta-alanine powder mixed with a binder. Binders commonly used in the art are known to contain reducing sugars. Indeed, the first cereal or protein bars containing beta-alanine produced by Applicant and including typical binders became black after only a few months storage at ambient temperature. Therefore, the prototypes tested in the present disclosure were prepared using only binders low in, or substantially free from, reducing sugars (e.g., maltitol syrup "Lycasin 75/75" and/or sucrose symp). By using such binders, Applicant found that beta-alanine remains partially separated from the cereal grains/crisps containing reducing sugars. Laboratory analysis over storage tests showed surprisingly good stability of beta-alanine inside the bars, as discussed above. Browning of the bars was not significantly more intense than in prepared reference bars not containing beta-alanine.

In a second embodiment, protein bar prototypes were prepared and included beta-alanine in a binder that was substantially free of reducing sugars (e.g., maltitol and/or sucrose syrup) as well as protein ingredients that were low in reducing sugars. For example, soy protein isolates are naturally low in reducing sugars. In an embodiment, milk proteins included in the protein bar prototypes contained less than or equal to 0.2% lactose. Laboratory results over shelf-life showed up to 97% beta-alanine recovery after 6 months storage at 30°C, as discussed above.

Generally speaking, the present compositions and products may include any amino acid in a binder composition. Non-limiting examples of amino acids include isoleucine, alanine, leucine, asparagine, lysine, aspartate, methionine, cysteine, phenylalanine, glutamate, threonine, glutamine, tryptophan, glycine, valine, proline, serine, tyrosine, arginine, citrulline, histidine, or combinations thereof. In an embodiment, the amino acid is beta-alanine. The present compositions and products may also include a biological source of an amino acid. For example, the compositions and product may include a biological source of beta-alanine including, for example, carnosine, anserine, balanine, and salts and chemical derivatives thereof. The amino acids or biological sources thereof may be provided in any form including, for example, powder, crystal, etc.

The amino acids can be provided in the compositions in amounts from about 1% by weight to about 20% by weight, or from about 2% by weight to about 10% by weight, or about 4% by weight. In an embodiment, the amino acids are provided in the compositions in an amount of about 4% by weight. In other embodiments, the amino acids may be provided in amount from about 1 g to about 5 g per serving size of the compositions, or about 2 or 3 g per serving size. In an embodiment, the amino acids may be provided in amount of about 1.6 g per serving size of the compositions. In another embodiment, the amino acids may be provided in amount of about 3.2 g per serving size of the compositions. The serving sizes of the compositions may be from about 30 g to about 90 g, or about 50 g. The daily recommended dosage for an initial carnosine loading phase is 3.2 g beta-alanine per day for about four weeks. Accordingly, in an embodiment, the products of the present disclosure include about 1.6g beta-alanine/serving.

The amino acids can be provided in the compositions in amounts from about 10% by weight to about 50% by weight, or from about 20% by weight to about 40% by weight, or about 30% by weight. In an embodiment, the amino acids are provided in the compositions in an amount of about 12-13% by weight. In another embodiment, the amino acids are provided in the compositions in an amount from about 35-40% by weight, or about 37.5%. In other embodiments, the amino acids may be provided in amount from about 1 g to about 5 g per serving size of the compositions, or about 2 or 3 g per serving size. In an embodiment, the amino acids may be provided in amount of about 1.6 g per serving size of the compositions. In another embodiment, the amino acids may be provided in amount of about 3.2 g per serving size of the compositions. The serving sizes of the compositions may be from about 40 g to about 60 g, or about 50 g. The daily recommended dosage for an initial carnosine loading phase is 3.2 g beta-alanine per day for about four weeks. Accordingly, in an embodiment, the products of the present disclosure include about 1.6g beta-alanine/serving.

The binders used in the present disclosure are binders that are low in, or substantially free of, reducing sugars such as, for example, glucose monomers, fructose monomers, lactose, etc. Examples of binders that may be used in the present disclosure include, for example, maltitol syrups, sucrose syrups, and maltitol and sucrose syrup blends. In an embodiment, the binder consists essentially of a maltitol syrup. In another embodiment, the binder consists essentially of a sucrose syrup. In yet another embodiment, the binder consists essentially of a maltitol and sucrose syrup blend. By incorporating the amino acid into the binders of the present disclosure, the amino acid is somewhat shielded or separated from any additional ingredients that may be added into the present compositions or products. This aids in reducing any reactions that may involve the amino acids, thereby resulting in loss of activity of the amino acid, browning of the products, etc.

Additional information and disclosure relating to the present food products and methods will be set forth below in the Examples.

The present food products may be nutritional compositions or nutritional products and may include beneficial or functional ingredients. For example, the food products may include a source of protein that is low in reducing sugars. The protein source may be dietary protein including, but not limited to animal protein (such as meat protein or egg protein), dairy protein (such as casein, caseinates (e.g., all forms including sodium, calcium, potassium caseinates), casein hydrolysates, whey (e.g., all forms including concentrate, isolate, demineralized), whey hydrolysates, milk protein concentrate, and milk protein isolate)), vegetable protein (such as soy protein, wheat protein, rice protein, and pea protein), or combinations thereof. In an embodiment, the protein source is selected from the group consisting of calcium caseinate, whey protein, soy protein isolates, milk proteins, or combinations thereof. The protein may be in powder format.

In an embodiment, the food products further include one or more prebiotics that do not contain a reducing sugar. The prebiotics may be selected from the group consisting of acacia gum, alpha glucan, arabinogalactans, beta glucan, dextrans, fructooligosaccharides, galactooligosaccharides, galactomannans, gentiooligosaccharides, glucooligosaccharides, guar gum, inulin, isomaltooligosaccharides, lactosucrose, lactulose, levan, maltodextrins, partially hydrolyzed guar gum, pecticoligosaccharides, retrograded starch, soyoligosaccharides, sugar alcohols, xylooligosaccharides, or combinations thereof.

In an embodiment, the prebiotics are free of reducing sugars.

In an embodiment, the food products further include one or more probiotics selected from the group consisting of *Aerococcus*, *Aspergillus*, *Bacteroides*, *Bifidobacterium, Candida, Clostridium*, *Debaromyces*, *Enterococcus*, *Fusobacterium*, *Lactobacillus*, *Lactococcus, Leuconostoc, Melissococcus*, *Micrococcus, Mucor, Oenococcus*, *Pediococcus*, *Penicillium*, *Peptostrepococcus*, *Pichia, Propionibacterium*, *Pseudocatenulatum*, *Rhizopus, Saccharomyces*, *Staphylococcus*, *Streptococcus*, *Torulopsis*, *Weissella*, or combinations thereof.

The food products may also include a source of fiber, fiber or a blend of different types of fiber. The fiber blend may contain a mixture of soluble and insoluble fibers. Soluble fibers may include, for example, fructooligosaccharides, acacia gum, inulin, etc. Insoluble fibers may include, for example, pea outer fiber.

In an embodiment, the fiber is free of reducing sugars.

In an embodiment, the food products further include a source of carbohydrates. Any suitable carbohydrate may be used in the present nutritional compositions including, but not limited to, sucrose, modified starch, amylose starch, tapioca starch, corn starch, and variations of lactose, glucose, fructose, corn syrup solids, maltodextrin that do not contain reducing sugars, or combinations thereof.

In an embodiment, the food products further include a source of fat. The source of fat may include any suitable fat or fat mixture. For example, the fat may include, but is not limited to, vegetable fat (such as olive oil, corn oil, sunflower oil, rapeseed oil, hazelnut oil, soy oil, palm oil, coconut oil, canola oil, lecithins, and the like) and animal fats (such as milk fat).

In an embodiment, the food products further include one or more synbiotics, phytonutrients and/or antioxidants. The antioxidants may be selected from the group consisting of carotenoids, coenzyme Q10 ("CoQ10"), flavonoids, glutathione, Goji (Wolfberry), hesperidin, Lactowolfberry, lignan, lutein, lycopene, polyphenols, selenium, vitamin A, vitamin B1, vitamin B6, vitamin B12, vitamin C, vitamin D, vitamin E, or combinations thereof.

In an embodiment, the food products further include one or more vitamins and minerals. Non-limiting examples of vitamins include Vitamins A, B-complex (such as B-1, B-2, B-6 and B-12), C, D, E and K, niacin and acid vitamins such as pantothenic acid and folic acid, biotin, or combinations thereof. Non-limiting examples of minerals include calcium, iron, zinc, magnesium, iodine, copper, phosphorus, manganese, potassium, chromium, molybdenum, selenium, nickel, tin, silicon, vanadium, boron, or combinations thereof.

In an embodiment, the food products include at least one source of ω-3 fatty acids. The sources may be, for example, fish oil, krill, plant sources of ω-3, flaxseed, walnut, and algae. Examples of ω-3 fatty acids include, for example, α-linolenic acid ("ALA"), docosahexaenoic acid ("DHA"), eicosapentaenoic acid ("EPA"), or combinations thereof.

In another embodiment, the food products may include at least one nucleotide.

Other optional ingredients can be added to make the food products sufficiently palatable. For example, the food products of the present disclosure can optionally include conventional food additives, such as any of, acidulants, additional thickeners, buffers or agents for pH adjustment, chelating agents, colorants, emulsifiers, excipients, flavor agents, minerals, osmotic agents, pharmaceutically acceptable carriers, preservatives, stabilizers, sugars, sweeteners, texturizers, or combinations thereof. The optional ingredients can be added in any suitable amount.

By way of example and not limitation, the following examples are illustrative of various embodiments of the present disclosure. The formulations and processes below are provided for exemplification only, and they can be modified by the skilled artisan to the necessary extent, depending on the special features that are desired.

### EXAMPLES

### Previous Consumer Insight/Consumer Tests

Burning muscle is a complaint that resonates among athletes, particularly those who engage in endurance activities. The athletes recognize that muscle burn causes them to stop or slow down sooner than they would like. In previous consumer insight analyses, consumers showed positive interest in being able to delay muscle burn and work out longer and harder by consuming a naturally occurring amino acid. Indeed, a consumer research team found that "having more intense workout by delaying build-up of muscle lactic acid" was the second highest scoring benefit desired by consumers. Qualitative research performed by Applicant also found that appeal for functional or beneficial ingredients increases if the ingredients are provided in familiar and trusted formats such as solid food bars.

### Embodiments of the Present Disclosure

There is strong scientific evidence to support the role of the amino aid beta-alanine in buffering muscle acid (H⁺) and improving high intensity exercise. Therefore, Applicant prepared and tested some food product prototypes to determine if sufficient levels of beta-alanine can be provided to promote muscle carnosine synthesis and subsequent muscle buffering and performance benefits.

Indeed, prototyes of various product formats containing a reactive amino acid (i.e., beta-alanine) were developed and tested by Applicant. To ensure stability of the beta-alanine in the food products, focus during creation of the various product formats included removal of reducing sugars from the product and reduction of the pH of the product.

Additionally, consumer insight can be gained to ascertain whether a food-based beta-alanine product would be desirable. Previous results indicated that once muscle carnosine is augmented, only 1.6 g beta-alanine per day is required to maintain muscle carnosine store, which is achievable in food format. Therefore, in the future, consumers could raise their muscle carnosine over about four weeks with 3.2 g beta-alanine per day with existing slow-release tablets, but could then have the option to maintain effective levels through consumption of beta-alanine incorporated in food products such as those discussed below.

### EXAMPLE 1 - Granola Bars

The focus of a first trial was on energy bars to be in-line with optimal timing to consume beta-alanine. Granola-type bars with from about 40 g to about 60 g serving size and containing 1.6g beta-alanine were developed. However, the typical energy bar contains relatively high amounts of reducing sugars (e.g., glucose, fructose), which are involved in Maillard reactions in the presence of free amino-acids. Reducing sugars (e.g., glucose/fructose syrups, rice syrup) are mainly present in the binder, in dehydrated fruit pieces, and to a lesser extent in cereals crisps/flakes.

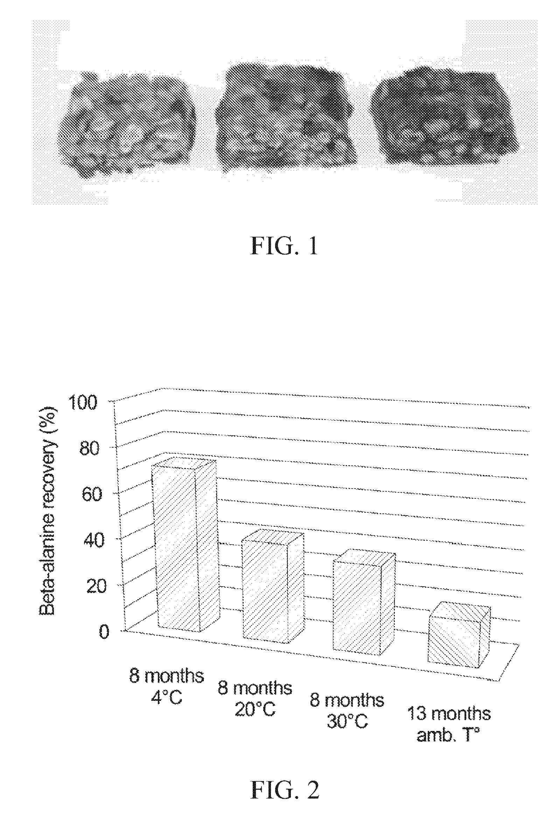

As shown in FIG. 1, the first bars presented shelf life issues with dark/black color after three months storage, with a large degree of beta-alanine degradation in presence of reducing sugars, occurring even at ambient temperatures, as shown in FIG. 2. The granola bars of FIG. 1 contained 1.6 g beta-alanine per serving, and were stored for three months at temperatures of 4°C, 20°C and 30°C, respectively, from left to right. FIG. 2 shows the average beta-alanine recovery in granola bars for various shelf-life conditions.

The methodology used for beta-alanine quantification in the present Examples was as follows:

### Preparation

All the samples (bars and RTD) were prepared in duplicate. An internal standard (i.e., L-cysteic acid) was added during the preparation.

To extract the free beta-alanine added in the sample, the whole bar was homogenized with deionised water in a one liter volumetric flask. After successive dilution and filtration, the solution was ready to be analyzed.

### Analysis

All the free beta-alanine analysis (bars and RTD) were determined using an Amino acid analyzer (Biochrom 30, Biochrom Ltd, Cambridge, UK; PEEK Li columns, Laborservice Onken GmbH, DGründau). The instrument has a post-column derivatization with ninhydrin. The amino acids including beta-alanine are mixed with the ninhydrin, which enables their detection in visible wavelengths and consequently their quantification.

Previous results from a human study performed by Applicant showed that urinary creatine excretion (i.e., loss) is greatly reduced when creatine was given in a matrix containing beta-glucans. To mimic this "controlled-release" profile, the granola bars were formulated with beta-glucan crisps.

In the following prototypes, reducing sugars (e.g., glucose, fructose) were mainly removed by replacing a common binder with maltitol syrup (e.g., Lycasin^{®} 75/75) or a sucrose syrup. The granola bar recipes are set forth below in Tables 1-2. Trial 1 of Table 2 below included about 22% beta-glucan crisps (e.g., extruded bran), and Trial 2 of Table 2 below included no beta-glucan crisps.

**TABLE 1**

| **Ingredient** | **Mass %** |
|---|---|
| | |
| Beta-glucan crisps | 22.658 |
| Maltitol Syrup | 14.896 |
| Rice Crisp | 14.305 |
| Oats (rolled, stabilized) | 10.326 |
| Chocolate Milk | 9.928 |
| Fruit Mix (Strawberry, Cranberry, sugar infused) | 7.878 |
| Sugar | 7.553 |
| High Oleic Canola Oil | 5.078 |
| Beta-Alanine | 3.993 |
| Glycerol | 3.043 |
| Iodized Salt | 0.183 |
| Sov Lecithin | 0.121 |
| Strawberry Liquid (flavoring) | 0.038 |
| | |
| TOTAL: | 100.00 |

**TABLE 2**

| | **Trial 1** | **Trial 2** |
|---|---|---|
| **Ingredient** | **Mass %** | **Mass %** |
| | | |
| Beta-glucan crisps | | |
| Maltitol Syrup | 14.896 | 14.896 |
| Rice Crisp | 14.305 | 20.265 |
| Oats (rolled, stabilized) | 10.326 | 27.024 |
| Chocolate Milk | 9.928 | 9.928 |
| Fruit Mix (Strawberry, Cranberry, sugar infused) | 7.878 | 7.878 |
| Sugar | 7.553 | 7.553 |
| High Oleic Canola Oil | 5.078 | 5.078 |
| Beta-Alanine | 3.993 | 3.993 |
| Glycerol | 3.043 | 3.043 |
| Iodized Salt | 0.183 | 0.183 |
| Sov Lecithin | 0.121 | 0.121 |
| Strawberry Liquid (flavoring) | 0.038 | 0.038 |
| High fiber Bran Straws | 22.658 | |
| | | |
| TOTAL: | 100.00 | 100.00 |

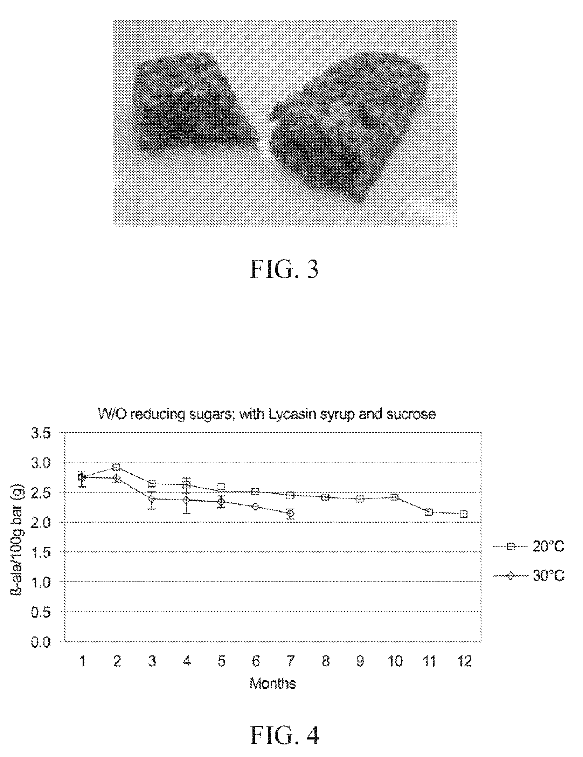

Results of storage tests showed relatively good stability with approximately 78% recovery after 12 months at 20°C, and ∼79% after 6 months at 30°C, as shown in FIGS. 3-4. FIGS. 4 illustrate beta-alanine concentration in granola bars with decreased reducing sugars during storage at 20°C and 30°C, respectively. Averages and standard deviations were calculated from two bars, each bar analyzed in duplicate. The dose of beta-alanine in the bars was 1.6 g beta-alanine per 40 g serving. Based on these findings, an over-dosage of about 25% will have to be used (if local tolerances allow) to guaranty compliance with the declared amount at the end of about a one-year shelf life.

Further, it is known that Maillard reaction kinetics are slower at a lower pH. Therefore, variants of the present bars were also developed by Applicant with sodium bisulphate to decrease pH of the binder. These additional trials did not necessarily provide improved stability and the beta-alanine recovery (or losses) was roughly equivalent to the neutral pH bars.

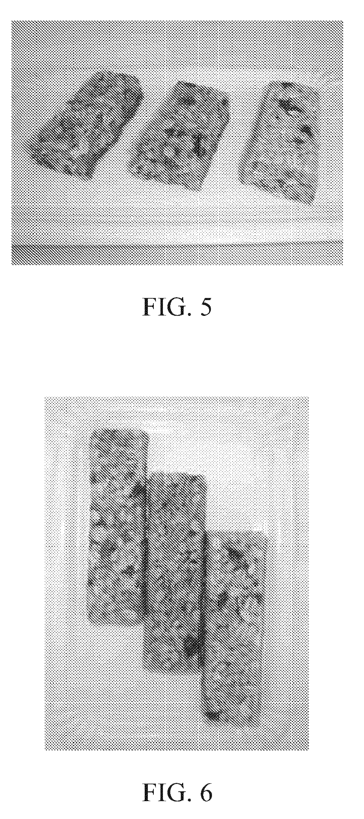

The beta-glucan crisps used were found to be a bit too hard in the developed prototypes. For this reason, additional bars were reformulated with different crisps or no crisps at all. Thus, three different bars were evaluated by Applicant including the following:
Bar #1: Beta-glucan crisps (36 % fibers, 18% beta-glucan);
Bar #2: "High fiber bran straws" (33% dietary fibers), which corresponds to the formulation of Trial #1 in Table 2 above; and
Bar #3: no beta-glucan crisps (replaced by rolled oats and rice crisps), which corresponds to the formulation of Trial #2 in Table 2 above. FIGS. 5-6 show images of granola bars containing 1.6 g beta-alanine and, from left to right, beta-glucan crisps "high fiber bran straws," and no beta-glucan crisps. The three variants contained 1.6g beta-alanine ± 8% per 40 g serving, as confirmed by beta-alanine quantification in each variant.

### EXAMPLE 2 - Protein Bars

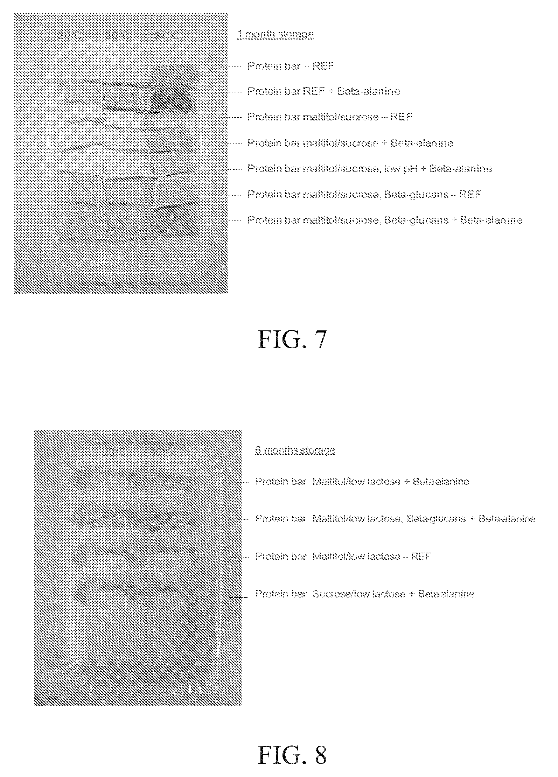

Bench scale prototypes of protein bars with beta-alanine and with maltitol/sucrose syrup as binder were developed. However, results showed browning already after one month shelf life at 30°C, as shown in FIG. 7. Applicant believes that the browning is most likely due to the lactose content of the protein ingredients.

Accordingly, additional prototypes were developed minimizing the presence of lactose by selecting protein powders low in lactose (e.g., <0.2% lactose). Results showed limited (variants with sucrose syrup binder) or no (variant with maltitol binder) browning after six months storage at 30°C, as shown in FIG. 8.

Examples of the protein bar recipes are set forth below in Table 3.

**TABLE 3**

| | **Trial 1** | **Trial 2** | **Trial 3** | **Trial 4** |
|---|---|---|---|---|
| **Ingredient** | **Mass %** | **Mass %** | **Mass %** | **Mass %** |
| | | | | |
| Maltitol Syrup | 41.408 | 35.839 | 42.630 | |
| Calcium Caseinate Powder | 26.712 | 23.119 | 27.500 | 26.712 |
| White Chocolate (coating) | 17.484 | 15.132 | 18.000 | 17.484 |
| Whey Protein | 9.150 | 7.919 | 9.420 | 9.150 |
| Beta-alanine | 2.865 | 2.480 | | 2.865 |
| Soy Protein Isolate | 1.943 | 1.681 | 2.000 | 1.943 |
| Vanilla Powder (flavoring) | 0.194 | 0.168 | 0.200 | 0.194 |
| Coconut Liquid (flavoring) | 0.126 | 0.109 | 0.130 | 0.126 |
| Vanilla Liquid (flavoring) | 0.097 | 0.084 | 0.100 | 0.097 |
| Lecithin | 0.019 | 0.017 | 0.020 | 0.019 |
| Beta-glucan crisps | | 13.451 | | |
| Sugar | | | | 31.075 |
| Water | | | | 10.333 |
| | | | | |
| TOTAL: | 100.00 | 100.00 | 100.00 | 100.00 |

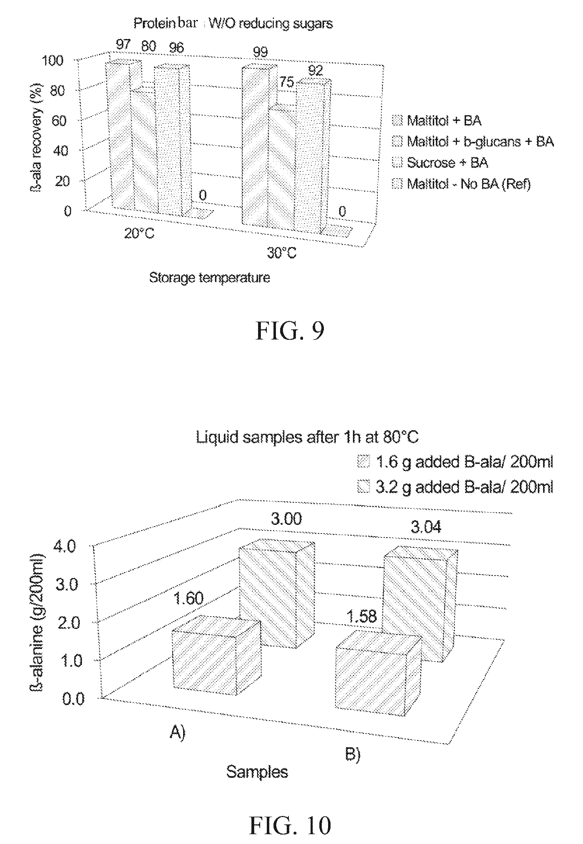

Quantification of beta-alanine in the protein bars confirmed impressively low losses after six months: 99 and 97% beta-alanine recovery at 20°C and 30°C, respectively, for the variant with maltitol syrup binder, and 96% and 92% recovery for the variant with sucrose binder. Losses are higher for the bars containing beta-glucans: 80 and 75% recovery at 20°C and 30°C, respectively, as shown in FIG. 9, which shows average beta-alanine percent recovery in protein bars, containing maltitol/sucrose syrup as a binder and having low lactose protein ingredients.

Here as well, the beta-glucan crisps contained in the variant with beta-glucans were found to be a bit hard and could be replaced by other type of crisps (e.g., "high fiber bran straws").

Trial results from a human study previously performed by Applicant showed that urinary creatine excretion (e.g., loss) is reduced in a protein type of matrix as compared to a solution. Additionally, encapsulation of beta-alanine in white chocolate chips showed promising results (e.g., no browning). The chips were then added to the protein bars.

### EXAMPLE 3 - Ready to Drink Formulas

As an alternative to bars, a Ready To Drink ("RTD") format with beta-alanine was also prepared and analyzed by Applicant. The currently available product Clinutren/Resource fruit was used.

Adding beta-alanine in a RTD format has various advantages: (i) a higher amount of beta-alanine can typically be added in a RTD format as the compound has a good solubility in water, without taste impact; (ii) beta-alanine stability would be increased due to the acidity of the drink (pH~4); and (iii) the currently available product has an interesting nutritional composition, which could be further adapted to performance nutrition.

The following prototypes were prepared: (i) Clinutren fruit with 1.6g beta-alanine per 200 ml; (ii) Clinutren fruit with 1.6g beta-alanine per 400 ml; and (iii) Clinutren fruit with 5.7g carnosine per 200 ml (delivers 1.6g beta-alanine after hydrolysis by the liver).

Carnosine was also tested as its metabolism is somewhat slower, therefore providing a natural slower-release. See, Harris et al., "The absorption of orally supplied beta-alanine and its effect on muscle carnosine synthesis in human vastus lateralis," Amino Acids, vol. 30: 279-289 (2006).

To evaluate the heat-stability of beta-alanine in such RTD compositions, prototypes were submitted to prolonged heating (e.g., 80°C for one hour). No loss was observed for a drink with 1.6g beta-alanine/200 ml and only about 6% for a drink with 3.2g beta-alanine/200 ml, as shown by FIG. 10. Factory trials with storage tests would be needed to validate these very promising results.

Finally, a safety evaluation study was performed by Applicant that concluded that "beta-alanine from controlled-release tablets at an initial loading dose of 3.2g/d for 4 weeks, followed by maintenance doses of 1.6g/d for 4 weeks, or at doses of 1.6g/d during 8 weeks does not modify any of the safety parameters analyzed.

In conclusion, prototypes of various product formats containing beta-alanine were developed and analyzed by Applicant. The various product formats included granola-types of bars, protein bars, and nutritional RTD compositions. Technical solutions were provided to ensure good to acceptable stability of beta-alanine in these products. Overall, Applicant found the results of the tests to be surprisingly beneficial.

It should be understood that various changes and modifications to the presently preferred embodiments described herein will be apparent to those skilled in the art. Such changes and modifications can be made without departing from the spirit and scope of the present subject matter and without diminishing its intended advantages. It is therefore intended that such changes and modifications be covered by the appended claims.

## Claims

1. A liquid food product comprising:
a reactive amino acid in an amount from about 1.0 g to about 10 g per about 100 to about 500 ml of a liquid, wherein the liquid food product has a pH from about 3 to about 5, wherein the liquid food product has good stability of the reactive amino acid after heating of the liquid food product at a temperature from about 70°C to about 90°C for an amount of time from about 45 minutes to about 75 minutes,
wherein the reactive amino acid is carnosine, or wherein the reactive amino acid is beta-alanine.

2. The liquid food product according to Claim 1, wherein the liquid food product is a ready-to-drink composition.

3. A method for improving the stability of a reactive amino acid in a liquid food product, the method comprising:
dissolving from about 1.0 g to about 10 g of a reactive amino acid per about 100 to about 500 ml of a liquid to make a liquid food product having an improved stability of the reactive amino acid;
heating the liquid food product at a temperature from about 70°C to about 90°C for an amount of time from about 45 minutes to about 75 minutes; and
wherein the liquid food product has a pH from about 3 to about 5,
wherein the reactive amino acid is carnosine, or wherein the reactive amino acid is beta-alanine.

4. The method according to Claim 3, wherein the liquid food product is selected from the group consisting of those claimed in Claim 1 or Claim 2.
